# DEMANDE DE BREVET EUROPEEN

(11) **EP 0 616 871 A1**
(43) Date de publication de la demande: **28.09.1994**
(21) Numéro de dépôt: 93402446.4
(22) Date de dépôt: 05.10.1993
(51) Int. Cl.: B24C 7/00, G01F 1/30, G01F 1/26

(54) **Appareil de mesure du débit de grenailles dans un générateur de grenaillage et générateur de grenaillage comportant un tel appareil**

(30) Priorité: 22.03.1993 FR 9303259
(71) Demandeur: WHEELABRATOR SISSON-LEHMANN, F-08001 CHARLEVILLE MEZIERES CEDEX (FR)
(72) Inventeur: Thomé, Bernard, F-08001 Charleville-Mezieres Cedex (FR)
(74) Mandataire: Faber, Jean-Paul

(57) **Abrégé**

Appareil de mesure du débit de grenailles dans un générateur de grenaillage caractérisé en ce qu'il comprend, inséré entre une conduite et un réservoir du générateur, un carter (6) s'érigeant verticalement et comportant à sa partie supérieure de moyens d'écoulement (23) de grenailles provenant du réservoir, tandis que sa partie inférieure est directement reliée à la conduite, à l'intérieur du carter (6) étant monté coulissant, verticalement contre l'action d'un ressort taré, un piston (63) dont l'extrémité supérieure est solidaire d'une tête (67) située au droit des moyens d'écoulement (23) des grenailles, des moyens étant prévus pour mesurer les déplacements du piston (63) sous le poids des grenailles provenant du réservoir et la conduite comportant des dérivations débouchant dans le réservoir et dans le carter (6).

## Description

L'invention concerne un appareil de mesure du débit de grenailles dans un générateur de grenaillage et un générateur de grenaillage comportant un tel appareil. Par grenaillage, on entend l'ensemble des opérations de traitement par impacts utilisant les effets de l'énergie cinétique donnée à des particules dont les dimensions sont comprises entre 0,03 et 5mm, c'est-à-dire, le sablage, le corindonnage, le grenaillage de pré-contrainte, le "Brit shot", le "shot peening" etc..

L'invention se rapporte à des installations comprenant un compresseur pour envoyer, sous pression, à travers un conduit des grenailles à une buse de projection.

On sait que la vitesse de projection des particules est d'une très grande importance dans toutes les opérations de grenaillage, toutefois la mesure de la vitesse de projection des grenailles est très difficile à obtenir car on travaille dans des milieux abrasifs avec une formation importante de poussières et les différents appareils électroniques qui ont été testés, compte tenu de l'environnement, se sont révélés peu fiables.

L'invention a notamment pour but de réaliser un appareil qui permet, d une manière fiable d'obtenir cette mesure.

L'appareil de mesure du débit de grenailles, selon l'invention, est destiné à équiper des générateurs de grenaillage comprenant un réservoir contenant les grenailles à projeter, une conduite reliée à une source d'air comprimé pour l'envoi d'air comprimé à une buse de projection de grenailles, l'appareil étant caractérisé en ce qu'il comprend, inséré entre la conduite et le réservoir, un carter s'érigeant verticalement et comportant à sa partie supérieure de moyens d'écoulement de grenailles provenant du réservoir, tandis que sa partie inférieure est directement reliée à la conduite, à l'intérieur du carter étant monté coulissant verticalement contre l'action d'un ressort taré, un piston dont l'extrémité supérieure est solidaire d'une tête située au droit des moyens d'écoulement des grenailles, des moyens étant prévus pour mesurer les déplacements du pis ton sous le poids des grenailles provenant du réservoir et la conduite comportant des dérivations débouchant dans le réservoir et dans le carter afin d'égaliser les pressions entre ces éléments et la conduite.

Grâce à une telle disposition, on peut, très facilement, mesurer le débit de grenailles et, en partant de celui-ci, pour une pression donnée, obtenir la vitesse de projection des grenailles à la sortie de la buse.

Une telle disposition est simple et ne tient pas compte de la grosseur des particules de grenailles.

Suivant une caractéristique constructive, dans le carter s'étend un cylindre vertical dans lequel est logé un détecteur analogique de mesure de distance, ledit cylindre étant fermé, à sa partie supérieure, par un chapeau percé d'un trou axial dans lequel est monté coulissant le piston, le ressort taré étant inséré entre la tête et l'extrémité libre du chapeau.

Suivant encore une autre caractéristique, la tête affecte la forme d'une calotte sphérique prolongée par une jupe cylindrique. Après de nombreux essais on a trouvé que cette forme convient le mieux pour obtenir une mesure juste.

Suivant une caractéristique constructive, le bord libre de la jupe cylindrique est relié au chapeau par une membrane souple, tandis que l'extrémité inférieure du cylindre est fermée par un bouchon pourvu d'un trou mettant en communication le cylindre avec le carter, un filtre étant inséré dans le trou et le piston est percé d'un trou débouchant dans le volume de la tête délimité par la membrane. Ainsi, l'intérieur du cylindre est mis à la même pression que le carter et en même temps les différentes pièces du système sont mises à l'abri de la poussière et de l'abrasion.

De manière à pouvoir régler le détecteur analogique à partir d'une position de référence, ledit détecteur analogique de mesure de distance est porté par un coulisseau, des moyens étant prévus pour commander le déplacement du coulisseau et des moyens étant prévus pour bloquer celui-ci dans la position désirée.

Suivant une caractéristique constructive, le carter, à sa partie supérieure, est fermé par une plaque dans laquelle est pratiquée un taraudage dans lequel se visse un raccord relié à la dérivation du conduit, le taraudage débouchant dans un trou lisse s'ouvrant sur un trou axial de la plaque mettant en communication le carter avec le réservoir, dans le trou axial s'étendant un manchon ayant une section inférieure à celle du trou axial pour ménager un espace libre de passage de l'air comprimé de dérivation vers le carter. Ainsi, on évite de perturber l'écoulement de grenailles depuis le réservoir vers l'appareil.

Suivant un détail constructif, le carter est terminé, à son extrémité inférieure, par une partie en tronc de cône renversée débouchant dans le conduit.

L'appareil comporte des moyens pour modifier la valeur de l'écoulement des grenailles depuis le réservoir vers le carter. Ainsi, on peut modifier le débit de grenailles et par suite la vitesse de projection de celles-ci à la sortie de la buse.

L'invention vise encore un générateur de grenaillage pourvue d'un appareil de mesure du débit de grenailles tel que défini ci-dessus, ledit générateur étant caractérisé en ce qu'il comporte, au moins, deux réservoirs remplis de grenailles, le premier des réservoirs étant relié à l'appareil de mesure du débit de grenailles, tandis que le second est relié au premier avec interposition d'une vanne et le second étant relié à une arrivée de grenailles avec interposition d'une vanne, chaque réservoir comportant un détecteur de niveau de grenailles minimum et un détecteur de niveau maximum, les deux réservoirs étant reliés par des dérivations à la conduite, la dérivation alimentant le second réservoir comportant une valve, l'ensemble étant relié à un calculateur de manière que, lorsque le niveau de grenailles dans le premier réservoir correspond au niveau minimum, la vanne insérée entre le premier et le second réservoir soit ouverte, tandis que la vanne insérée entre le second réservoir et l'arrivée de grenailles est fermée, la valve étant ouverte afin d'obtenir un équilibre des pressions entre les deux réservoirs et la grenaille contenue dans le deuxième réservoir s'écoulant par gravité dans le premier réservoir, lorsque le niveau de grenailles dans ledit premier réservoir correspond au niveau maximum, la valve est fermée, la vanne insérée entre les deux réservoirs est fermée et la vanne insérée entre l'arrivée de grenailles et le second réservoir est ouverte de manière que le second réservoir soit mis à la pression atmosphérique.

Afin de pouvoir modifier le débit de grenailles, l'installation comporte insérée entre le premier réservoir et l'appareil de mesure du débit de grenailles une vanne régulée et reliée au calculateur de manière à pouvoir faire varier le débit de grenailles.

L'invention va maintenant être décrite avec plus de détails en se référant à des modes de réalisation particuliers donnés à titre d'exemple seulement et représentés aux dessins annexés, dans lesquels :
Figure 1 est une vue en élévation schématique d'un appareil, selon l'invention.
Figure 2 est une vue en coupe, à plus grande échelle, montrant les moyens de mesure de l'écoulement des grenailles.
Figure 3 montre schématiquement, en élévation, un générateur de grenaillage.

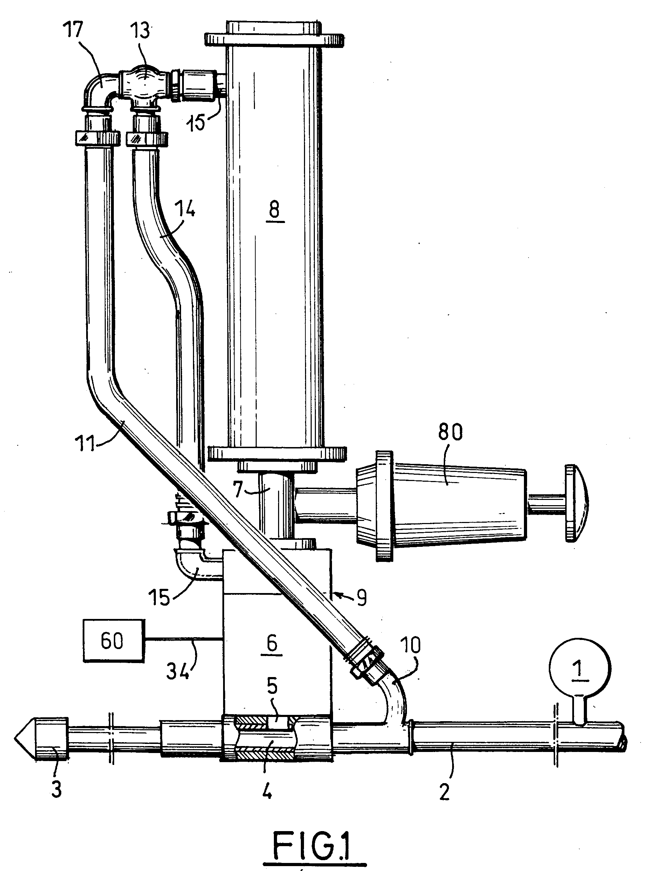

A la figure 1, on a représenté schématiquement un appareil de grenaillage qui comprend un compresseur 1 qui envoie dans une conduite 2 de l'air comprimé, la conduite 2 étant terminée par une buse 3 de projection de grenailles.

Sur la conduite 2 est inséré un T 4 directement en communication par son élément tubulaire transversal 5 avec un appareil de mesure du débit d'écoulement de grenailles 9.

L'appareil 9 est formé d'un carter 6 dont l'extrémité supérieure est reliée par une bride 7 à un réservoir 8 rempli de grenailles.

Sur la conduite 2, il est prévu une dérivation 10 qui est prolongée par un tube 11 relié par un coude 17 au réservoir 8.

Entre le coude 17 et le réservoir 8 est inséré un T 13 relié par un tube 14 à un coude 15 vissé dans un taraudage 16 d'une plaque solidaire de l'extrémité supérieure du carter 6, le taraudage 16 étant prolongé par un trou lisse 19 qui débouche dans un trou axial 20 de la plaque mettant en communication le carter 6 avec la bride 7.

L'extrémité supérieure du trou axial 20 comporte une gorge 21 avec laquelle vient coopérer une collerette 22 d'un manchon 23 dont le diamètre extérieur est inférieur à celui du conduit 20 afin de ménager un espace libre 18.

L'extrémité inférieure du carter 6 est solidaire d'une bride 25 percée de trous 26 pour sa fixation à une embase 27 solidaire de l'élément tubulaire transversal 5.

Entre l'embase 27 et la bride 26 est enserre un manchon 30 avec interposition de joints 31 et dans lequel est fixé un support diamétral 32.

Le support diamétral 32 comprend une partie 32a percée d'un conduit axial 33 dans lequel s'étend un câble électrique 34, un joint d'étanchéité 35 étant inséré entre le câble 34 et le conduit 33.

L'autre partie 32b du support diamétral 32 est percée d'un conduit axial 37 dans lequel peut tourner un axe 38 comportant une gorge 39 dans laquelle est inséré un joint 40. L'axe 38 est pourvu d'une seconde gorge 41 avec laquelle coopère une butée 42 afin d'éviter tout déplacement axial dudit axe 38. A l'extrémité extérieure, l'axe 38 comporte une empreinte 43 pour pouvoir recevoir un outil pour commander sa rotation, tandis qu'à son autre extrémité il comporte un téton 44 décalé par rapport à son axe longitudinal pour former un excentrique.

Le support 32 est solidaire d'un corps cylindrique 50 dont l'extrémité inférieure est taraudée pour recevoir un bouchon fileté 51 percé d'un trou 52 dans lequel est logé un filtre 53.

Dans le cylindre 50 est mobile un coulisseau 55 comportant un trou borgne 56 avec lequel coopère l'excentrique 44.

Le coulisseau 55 est solidaire d'un détecteur analogique de mesure de distance 57 relié par les câbles électriques 34 à un calculateur 60.

L'extrémité supérieure du cylindre 50 est fermée par un chapeau 61 percé d'un trou axial 62 dans lequel est logé un manchon en matière auto-lubrifiante 68, un piston 63 étant monté coulissant dans ledit manchon 68, l'extrémité inférieure du piston 63 étant pourvue d'une butée 64, tandis que l'extrémité supérieure est terminée par un filetage 65 se vissant dans un taraudage 66 d'une tête 67.

La tête 67 affecte la forme d'une calotte sphérique 67a prolongée par une jupe cylindrique 67b.

Le chapeau 61 est terminé par un épaulement 69 contre lequel prend appui l'une des extrémités d'un ressort de compression taré 70 dont l'autre extrémité porte contre le fond d'un logement 71 de la tête 67. Le bord libre de la jupe 67b est relié par une membrane souple 73 à l'épaulement 69.

Le piston 63 est percé d'un trou axial 74 qui débouche latéralement à l'intérieur de la tête 67.

Le coulisseau 55 comporte un trou 75 pour mettre en communication l'extrémité supérieure et l'extrémité inférieure du cylindre 50.

La tête 67 est située exactement dans l'axe du manchon 23 et l'embase 27 est terminée par un tronc de cône renversé 76 dont la petite base est raccordée à l'élément tubulaire 5.

Le réservoir 8, le carter 6 et le cylindre 50 sont à la même pression compte tenu des raccordements 10, 11, 13, 14 et 15 reliés à la conduite 2. Les grenailles contenues dans le réservoir 8 s'écoulent par gravité à travers le manchon 23 et butent sur la tête 67. En fonction du flux de grenailles remontant la tête 67, celle-ci est déplacée contre l'action du ressort 70 de sorte que la distance séparant la butée 64 du piston 63 du détecteur 57 est modifiée.

A partir de la mesure de la distance séparant la butée 64 du détecteur 57, on peut mesurer le débit du flux de grenailles arrivant par le manchon 23 et, par conséquent, le débit de grenailles.

L'axe 38 permet, par son excentrique 44, de modifier la position du détecteur 57 de manière à pouvoir ajuster celui-ci à partir d une position de référence.

Sur la bride 7 est inséré un robinet 80 qui permet de modifier la section de passage de grenailles vers le carter 6 et ainsi de modifier la vitesse de projection à la sortie de la buse 3.

Un avantage de ce système est qu'il permet d'obtenir des mesures parfaitement justes quelle que soit la grosseur des grenailles.

L'intérieur du cylindre 50 est parfaitement protégé de l'abrasion et des poussières.

Les différents paramètres peuvent être affichés sur le calculateur 60 ce qui permet en agissant sur la vanne 80 d'ajuster le grenaillage à la valeur désirée.

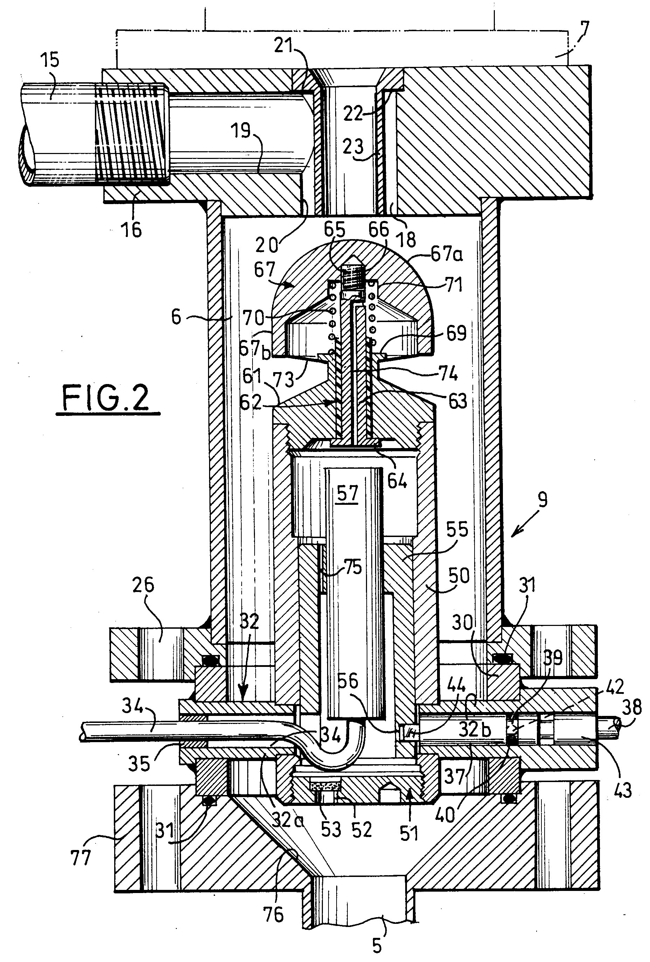

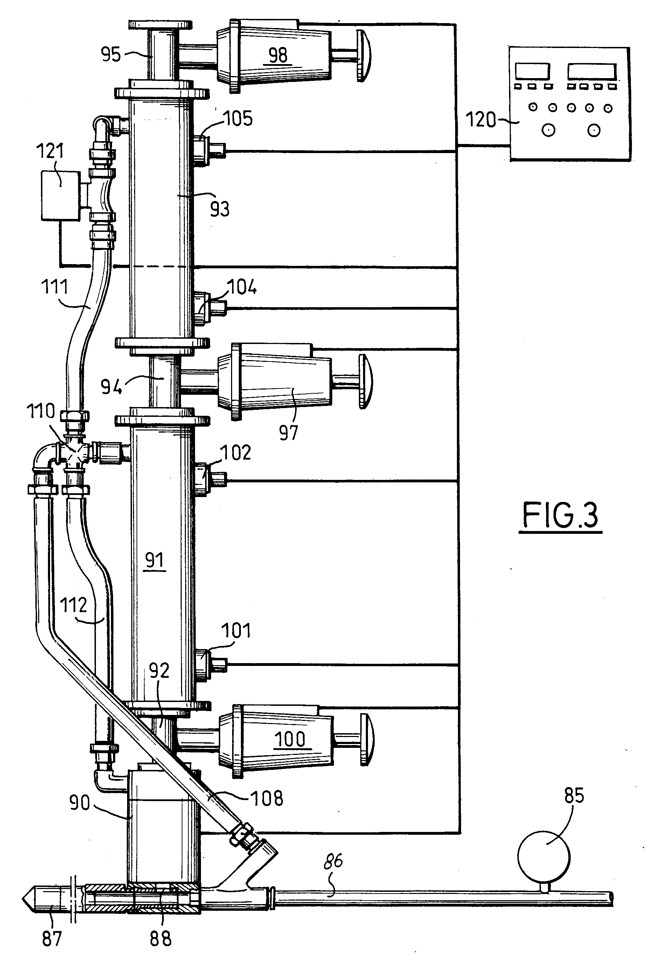

A la figure 3, on a représenté un générateur pour un grenaillage en continu. Celle-ci comprend un compresseur 85 qui envoie de l'air sous pression dans une conduite 86 comportant, à son extrémité libre, une buse 87 de projection de grenailles. La conduite 86 est, par un élément tubulaire 88, reliée à un appareil 90 de mesure du débit de grenailles tel que l'appareil 9 décrit aux figures 1 et 2.

L'appareil 90 est relié à un réservoir 91 par une bride 92 et le réservoir 91 est relié à un autre réservoir 93 par une bride 94, ce dernier étant relié à une trémie (non représentée) remplie de grenailles.

Sur les brides 94 et 95 sont insérées, respectivement, des vannes 97 et 98 fonctionnant en tout ou rien, tandis que sur la bride 92 est montée une vanne régulée 100.

Le réservoir 91 comporte un premier détecteur 101 du niveau minimum de grenailles et un second détecteur 102 du niveau maximum de grenailles.

Le réservoir 93 est également pourvu de deux détecteurs 104 et 105, le premier correspondant au niveau minimum de grenailles et le second au niveau maximum de grenailles.

Sur la conduite 86 est branchée une dérivation 108 débouchant dans le réservoir 91. Sur cette dérivation est inséré un raccord quatre voies 110, à partir duquel s'étend une seconde dérivation 111 alimentant le réservoir 93 et une troisième dérivation 112 alimentant l'appareil 90.

Sur la dérivation 111 est insérée une valve électrique 121 qui permet de couper l'arrivée d'air comprimé dans le réservoir 93.

Les réservoirs 91, 93 et l'appareil 90 peuvent être avec la conduite 86 à la même pression. Les vannes 97, 98 et 100, les détecteurs de niveau minimum 101, 104, les détecteurs de niveau maximum 102, 105, la valve électrique 121 et le détecteur analogique de mesure de la distance séparant l'extrémité 64 du piston 63 dudit détecteur sont reliés à un calculateur 120 qui permet de programmer, d'une part, le fonctionnement automatique de l'installation et, d'autre part, de modifier le débit d'écoulement des grenailles dans l'appareil 90 afin de modifier la vitesse de projection des grenailles à la sortie de la buse 87.

Le calculateur comprend des dispositifs d'affichage permettant d'afficher les valeurs à obtenir, celui-ci calculant automatiquement les paramètres et commandant la vanne 100 en conséquence.

Le fonctionnement de l'installation est le suivant.

La valve 121 et la vanne 97 sont fermées. La vanne 100 est ajustée en fonction des paramètres affichés sur le calculateur 120. La vanne 98 est ouverte et le réservoir 93 est rempli par gravité de grenailles.

Les grenailles s'écoulent par gravité depuis le réservoir 91 dans l'appareil 90 où le débit est mesuré par le détecteur, les grenailles étant ensuite entraînées par le flux d'air circulant dans la conduite 86 et projetées par la buse 87 sur la surface à traiter.

Lorsque le niveau dans le réservoir 91 arrive au droit du détecteur 101, la vanne 98 est fermée et la valve 121 ouverte de manière que le réservoir 93 soit mis à la même pression que le reste de l'installation, tandis que la vanne 97 est ouverte de manière que le réservoir 91 se remplisse jusqu'au détecteur de niveau 102. Lorsque le réservoir 91 est plein, la vanne 97 est fermée, la vanne 98 est ouverte et la valve 121 fermée.

Bien entendu, l'invention n'est pas limitée aux modes de réalisation qui viennent d'être décrits et représentés. On pourra y apporter de nombreuses modifications de détail sans sortir pour cela du cadre de l'invention.

## Revendications

1. Appareil de mesure du débit de grenailles dans un générateur de grenaillage comprenant un réservoir (8) contenant les grenailles à projeter, une conduite (2) reliée à une source d'air comprimé pour l'envoi d'air comprimé à une buse (3) de projection des grenailles, caractérisé en ce qu'il comprend, inséré entre la conduite (2) et le réservoir (8), un carter (6) s'érigeant verticalement et comportant à sa partie supérieure de moyens d'écoulement (23) de grenailles provenant du réservoir (8), tandis que sa partie inférieure est directement reliée à la conduite (2), à l'intérieur du carter (6) étant monté coulissant, verticalement contre l'action d'un ressort taré, un piston (63) dont l'extrémité supérieure est solidaire d'une tête (67) située au droit des moyens d'écoulement des grenailles (23), des moyens étant prévus pour mesurer les déplacements du piston (63) sous le poids des grenailles provenant du réservoir (8) et la conduite (2) comportant des dérivations débouchant dans le réservoir (8) et dans le carter (6) afin d'égaliser les pressions entre ces éléments et la conduite (2).

2. Appareil de mesure du débit de grenailles, selon la revendication 1, caractérisé en ce que dans le carter (6) s'étend un cylindre vertical (50) dans lequel est logé un détecteur anologique de mesure de distance, ledit cylindre étant fermé à sa partie supérieure par un chapeau (61) percé d'un trou axial (62) dans lequel est monté coulissant le piston (63), le ressort taré 70 étant inséré entre la tête (67) et l'extrémité libre du chapeau (61).

3. Appareil de mesure du débit de grenailles, selon la revendication 1, caractérisé en ce que la tête (67) affecte la forme d'une calotte (67a) sphérique prolongée par une jupe cylindrique (67b).

4. Appareil de mesure du débit de grenailles, selon les revendications 1 à 3, caractérisé en ce que le bord libre de la jupe cylindrique (67b) est relié au chapeau (61) par une membrane souple (73), tandis que l'extrémité inférieure du cylindre (50) est fermée par un bouchon (51) pourvu d'un trou (52) mettant en communication le cylindre avec le carter (6), un filtre (53) étant inséré dans le trou (52) et le piston est percé d'un trou (74) débouchant dans le volume de la tête délimité par la membrane (73).

5. Appareil de mesure du débit de grenailles, selon les revendications 1 à 3, caractérisé en ce que le détecteur analogique de mesure de distance (57) est porté par un coulisseau (55), des moyens (44) étant prévus pour commander le déplacement du coulisseau (55) et des moyens étant prévus pour bloquer celui-ci dans la position désirée.

6. Appareil de mesure du débit de grenailles, selon la revendication 1, caractérisé en ce que le carter, à sa partie périphérique, est fermé par une plaque dans laquelle est pratiquée un taraudage (16) dans lequel se visse un raccord (15) relié à la dérivation (11) du conduit (2), le taraudage débouchant dans un trou lisse (19) s'ouvrant sur un trou axial (20) de la plaque mettant en communication le carter (6) avec le réservoir (8), dans le trou axial s'étendant un manchon (23) ayant une section inférieure à celle du trou axial (20) pour ménager un espace libre (18) de passage de l'air comprimé de dérivation vers le carter (6).

7. Appareil de mesure du débit de grenailles, selon la revendication 1, caractérisé en ce que le carter (6) est terminé, à son extrémité inférieure, par une partie en tronc de cône renversée (76) débouchant dans le conduit (2).

8. Appareil de mesure du débit de grenailles, selon la revendication 1, caractérisé en ce qu'il comporte des moyens (80) pour modifier la valeur de l'écoulement des grenailles depuis le réservoir (8) vers le carter (6).

9. Générateur de grenaillage comportant un appareil de mesure du débit de grenailles, selon la revendication 1 et/ou l'une quelconque des revendications 2 à 8, caractérisée en ce qu'elle comporte, au moins, deux réservoirs remplis de grenailles (91, 93), le premier des réservoirs (91) étant relié à l'appareil de mesure du débit de grenailles (90), tandis que le second (93) est relié au premier avec interposition d'une vanne (97) et le second étant relié à une arrivée de grenailles avec interposition d'une vanne (98), chaque réservoir (91, 93) comportant un détecteur de niveau de grenailles minimum (101, 104) et un détecteur de niveau maximum (102, 105), les deux réservoirs étant reliés par des dérivations (108 à 111) à la conduite (86), la dérivation (111) alimentant le second réservoir (93) comportant une valve (121), l'ensemble étant relié à un calculateur (120) de manière que, lorsque le niveau de grenailles dans le premier réservoir correspond au niveau minimum, la vanne (97) insérée entre le premier et le second réservoir soit ouverte tandis que la vanne (98) insérée entre le second réservoir (93) et l'arrivée de grenailles est fermée, la valve (121) étant ouverte afin d'obtenir un équilibre des pressions entre les deux réservoirs (91, 93), la grenaille contenue dans le second réservoir (93) s'écoulant par gravité dans le premier réservoir, tandis que lorsque le niveau de grenailles dans le premier réservoir (91) correspond au niveau minimum, la valve (121) est fermée, la vanne (97) insérée entre les deux réservoirs est fermée et la vanne (98) insérée entre l'arrivée de grenailles et le second réservoir (93) est ouverte de manière que le second réservoir soit mis à la pression atmosphérique.

10. Générateur de grenaillage, selon la revendication 9, caractérisée en ce qu'elle comporte insérée entre le premier réservoir (91) et l'appareil de mesure du débit de grenailles une vanne (100) régulée et reliée au calculateur de manière à pouvoir faire varier le débit de grenailles.
